# EUROPÄISCHE PATENTSCHRIFT

(11) **EP 2 173 673 B1**
(45) Veröffentlichungstag und Bekanntmachung des Hinweises auf die Patenterteilung: **03.05.2017**
(21) Anmeldenummer: 08774115.3
(22) Anmeldetag: 18.06.2008
(51) Int. Cl.: C03B 19/06, C03B 20/00, C03C 1/00, C03C 3/06, C03C 17/02, C03C 17/25

(54) **VERFAHREN ZUR HERSTELLUNG EINES VERBUNDKÖRPERS AUS EINEM BASISKÖRPER AUS OPAKEM QUARZGLAS UND EINER DICHTEN VERSIEGELUNGSSCHICHT**
METHOD FOR THE PRODUCTION OF A COMPOSITE BODY FROM A BASIC BODY OF OPAQUE QUARTZ GLASS AND A TIGHT SEALING LAYER
PROCÉDÉ DE PRODUCTION D'UN CORPS COMPOSITE FORMÉ D'UN CORPS DE BASE EN VERRE DE QUARTZ OPAQUE ET D'UNE COUCHE DE SCELLAGE ÉTANCHE

(30) Priorität: 30.06.2007 DE 102007030698
(43) Veröffentlichungstag der Anmeldung: 14.04.2010
(73) Patentinhaber: Heraeus Quarzglas GmbH & Co. KG, 63450 Hanau (DE)
(72) Erfinder: WERDECKER, Waltraud, 63456 Hanau (DE); LEIST, Johann, 63674 Altenstadt (DE)
(74) Vertreter: Staudt, Armin Walter
(86) Internationale Anmeldenummer: PCT/EP2008/057654
(87) Internationale Veröffentlichungsnummer: WO 2009/003839

(56) Entgegenhaltungen:
- DE-A1-102004 052 312
- DE-A1-102006 062 166
- US-A1- 2006 038 470
- US-A1- 2006 046 075

## Beschreibung

Die Erfindung betrifft ein Verfahren zur Herstellung eines Verbundkörpers aus einem Basiskörper aus opakem Quarzglas und einer dichten Versiegelungsschicht.

Quarzglas-Bauteile werden häufig hohen thermischen Belastungen und chemisch aggressiven Umgebungen ausgesetzt. Bei diesen Anwendungen spielen eine guten Wärmeisolierung, eine hohe Temperaturstabilität oder Temperaturwechselbeständigkeit sowie eine hohe chemische Beständigkeit und Kontaminationsfreiheit eine wichtige Rolle. Zunehmend höhere Anforderungen werden an die Standzeit und Partikelfreiheit derartiger Quarzglas-Bauteile gestellt.

In Bezug auf die Standzeit eines Quarzglas-Bauteils spielt die Blasenfreiheit oberflächennaher Bereiche eine wichtige Rolle. Beispielsweise führen zunächst geschlossene Blasen, die im Verlaufe des Einsatzes durch Materialabtrag geöffnet werden häufig zum Austritt von Verunreinigungen oder Partikeln, was die Lebensdauer des Bauteils für partikelsensitive Anwendungen beendet.

### Stand der Technik

Zur Vermeidung von Kontaminationen bietet es sich besonders in der Halbleiterfertigung an, Quarzglas-Bauteile aus synthetischem Quarzglas einzusetzen. Eine demgegenüber kostengünstigere Alternative ist in der DE 698 06 628 T2 beschrieben, aus der auch ein Quarzglas-Bauteil für die Halbleiterfertigung und ein Verfahren gemäß der eingangs genannten Gattung bekannt sind. Darin wird vorgeschlagen, auf einem in einem separaten Verfahrensschritt vorab erzeugten Quarzglas-Bauteil aus natürlichem Rohstoff eine dichte Schicht aus synthetischem Quarzglas zu erzeugen. Hierzu werden durch Flammenhydrolyse einer siliziumhaltigen Ausgangsverbindung in einem Abscheidebrenner SiO₂-Partikel erzeugt und diese auf der Oberfläche des Bauteils abgeschieden und dort unter Bildung einer transparenten, blasenfreien, dichten und glatten Versiegelungsschicht aus synthetischem Quarzglas sofort verglast.

Die Ausbildung der Versiegelungsschicht erfolgt durch eine relative Bewegung des Abscheidebrenners und der zu beschichtenden Bauteil-Oberfläche zueinander, wobei das Schichtwachstum von der aktuellen Abscheiderate und der Anzahl der Schichtlagen abhängt.

Die Herstellung von Versiegelungsschichten durch ein derartiges Abscheideverfahren - insbesondere die reproduzierbare Herstellung gleichmäßiger Schichtdicken - ist langwierig und erfordert einen hohen apparativen und zeitlichen Aufwand.

Ein weiteres Verfahren zum Erzeugen einer dichten und transparenten Versiegelungsschicht auf einem porösen, durch ein Schlickergießverfahren hergestellten Grünkörper wird in der DE 44 40 104 C2 beschrieben. Dabei wird eine wässrige Suspension von SiO₂-Teilchen mit einer chemischen Reinheit von 99,9 % SiO₂ erzeugt, in eine Gipsform gegossen und der so erhaltene Grünkörper wird in einem Ofen auf eine Sintertemperatur im Bereich von 1.350 °C bis 1.450 °C aufgeheizt und dabei zu einem Grundkörper aus opakem Quarzglas gesintert Die Oberfläche des Grundkörpers wird anschließend mittels einer Knallgasflamme lokal auf hohe Temperaturen im Bereich von 1.650 °C bis 2.200 °C erhitzt, so dass sich das opake Grundmaterial in einem oberflächennahen Bereich einer Stärke von ca. 0,5 mm in transparentes Quarzglas umwandelt.

Es hat sich jedoch gezeigt, dass mittels dieser Methode transparente Schichtdicken von mehr als 2 mm nicht zu erreichen sind. Offensichtlich erschwert die verglaste, transparente Versiegelungsschicht ein ausreichendes Erhitzen der darunter liegenden Schichten. Dieses Problem ist durch höhere Flammentemperaturen nicht zu lösen, da diese zu einer plastischen Verformung des Bauteils und zum Abdampfen von gasförmigem Siliziummonoxid (SiO) führen. Außerdem werden durch das Verglasen bei hohen Temperaturen Spannungen induziert, die zur Verformung des Bauteils führen können.

Ein Verfahren der eingangs genannten Gattung ist aus der DE 10 2004 052 312 A1 bekannt. Es wird vorgeschlagen, einen Basiskörper aus opakem Quarzglas mit einer Oberflächenschicht zu versehen, indem ein SiO₂-Schlicker mit den aus der DE 44 40 104 C2 bekannten Eigenschaften als Schlickerschicht aufgebracht, anschließend getrocknet und unter Bildung einer transparenten oder opaken Deckschicht verglast wird. Ziel ist eine hohe Ätzresistenz des Verbundkörpers.

Beim Verglasen der Schlickerschicht erfährt jedoch auch das darunter liegende opake Material des Basiskörpers eine Veränderung, und es kann zu Spannungen und Verformungen kommen.

Da das Schlickergießverfahren an und für sich eine kostengünstige Herstellung von Bauteilen - auch mit komplexer Geometrie - ermöglichen würde, ist es wünschenswert, die genannten Nachteile bei der Herstellung von Verbundkörpern aus Quarzglas mit einer dichten Versiegelungsschicht zu minimieren.

### Technische Aufgabe

Der Erfindung liegt daher die Aufgabe zugrunde, ein Verfahren anzugeben, mittels dem ein Basiskörper aus opakem Quarzglas mit einer dichten Versiegelungsschicht versehen werden kann, ohne dass es zu nennenswerten Veränderungen und Verformungen des opaken Materials kommt.

Diese Aufgabe wird erfindungsgemäß durch ein Verfahren gelöst, das folgende Verfahrensschritte umfasst:
(a) Herstellen des Basiskörpers unter Einsatz eines ersten Schlickers, der eine erste Dispersionsflüssigkeit und erste amorphe SiO₂-Teilchen mit Teilchengrößen bis maximal 500 µm enthält, wobei Teilchen mit Teilchengrößen im Bereich zwischen 1 µm und 60 µm den größten Feststoff-Volumenanteil ausmachen, der einen ersten Mengenanteil an SiO₂-Nanoteilchen mit Teilchengrößen von weniger als 100 nm enthält, und der durch eine erste, höhere Verglasungstemperatur charakterisiert ist.
(b) Bereitstellen eines zweiten Schlickers, der eine zweite Dispersionsflüssigkeit und zweite amorphe SiO₂-Teilchen mit Teilchengrößen bis maximal 100 µm enthält, wobei Teilchen mit Teilchengrößen im Bereich zwischen 1 µm und 40 µm den größten Feststoff-Volumenanteil ausmachen, und dessen Zusammensetzung sich von derjenigen des ersten Schlickers mindestens darin unterscheidet, dass er einen zweiten Mengenanteil an SiO₂-Nanoteilchen enthält, der im Bereich zwischen 0,2 Gew.-% bis 15 Gew.-% größer ist als der erste Mengenanteil (bezogen auf jeweils den gesamten Feststoffgehalt), und der durch eine zweite, niedrigere Verglasungstemperatur charakterisiert ist,
(c) Erzeugen einer Schlickerschicht aus dem zweiten Schlicker auf einer Oberfläche des Basiskörpers, Trocknen der Schlickerschicht
(d) und anschließendes Verglasen der Schlickerschicht unter Bildung der dichten Versiegelungsschicht.

Bei dem Basiskörper handelt es sich um einen Körper aus Quarzglas, das aus synthetisch hergestellten oder aus natürlich vorkommenden Rohstoffen erzeugt ist. Dieses Quarzglas ist opak oder transluzent. Das Aufbringen des zweiten Schlickers erfolgt beispielsweise durch Tauchen, Sprühen, Rakeln oder Siebdruckverfahren. Die Konsistenz des Schlickers wird an das jeweilige Auftragsverfahren angepasst und reicht zwischen leichtflüssig bis pastös.

Beim erfindungsgemäßen Verfahren erfolgt die Herstellung des Verbundkörpers vollständig über die "Schlicker-Route". Im Unterschied zum bekannten Verfahren werden für die Herstellung des Basiskörpers und für die Herstellung der Versiegelungs- bzw. Versiegelungsschicht jedoch Schlickerqualitäten eingesetzt, die sich hinsichtlich ihrer spezifischen Verglasungstemperaturen charakteristisch unterscheiden. Ein wesentlicher Aspekt der Erfindung besteht darin, Maßnahmen vorzusehen, die den Unterschied der spezifischen Verglasungstemperaturen der Schlicker vergrößern.

Eine Maßnahme für unterschiedliche Verglasungstemperaturen besteht darin, dass der bei niedrigerer Temperatur verglasende, zweite Schlicker zur Erzeugung der Versiegelungsschicht zusätzlich SiO₂-Nanoteilchen enthält, oder dass er mehr SiO₂-Nanoteilchen enthält als der erste Schlicker zur Erzeugung des Basiskörpers. Genauer gesagt liegt der Mengenanteil an SiO₂-Nanoteilchen im Bereich zwischen 0,2 Gew.-% bis 15 Gew.-% im zweiten Schlicker höher als der entsprechende Mengenanteil im ersten Schlicker. Der zweite Schlicker enthält eine gegebene Menge SiO₂-Nanoteilchen, wohingegen der Mengenanteil an SiO₂-Nanoteilchen im ersten Schlicker gering sein und gegen Null gehen kann.

Unter SiO₂-Nanoteilchen werden SiO₂-Teilchen mit Teilchengrößen im Bereich einiger Nanometer bis 100 nm verstanden. Derartige Nanoteilchen bestehen typischerweise aus einiger tausend SiO₂-Einheiten und haben eine spezifische Oberfläche nach BET von 40 bis 800 m²/g, bevorzugt zwischen 55 und 200 m²/g.

Eine weitere Maßnahme für unterschiedliche Verglasungstemperaturen liegt darin, dass der bei niedrigerer Temperatur verglasende, zweite Schlicker eine Teilchengrößenverteilung aufweist, bei der relativ kleine Teilchen - zwischen 1 und 40 µm - den größten Volumenanteil ausmachen.

Dadurch, dass sich die Verglasungstemperaturen von Basiskörper und Schlickerschicht unterscheiden, wird zum einen ein Verglasen der Schlickerschicht bei niedrigerer Temperatur ermöglicht, so dass geringere Spannungen in den Basiskörper eingebracht werden und so eine Verformung des Basiskörpers vermieden wird. Und zum anderen wird die Ausbildung einer Versiegelungsschicht ermöglicht, die sich in ihren chemischen, mechanischen und insbesondere in ihren optischen Eigenschaften deutlich von denjenigen des Basiskörpers absetzt. Obwohl Basiskörper und Versiegelungsschicht aus Quarzglas bestehen, bildet sich zwischen ihnen eine definierte Grenzfläche ohne größeren Übergangsbereich aus, was beispielsweise die Effektivität einer diffusen Reflexion erhöht. Darüber hinaus sind wesentliche Funktionen der Versiegelungsschicht darin zu sehen, dass sie offene Poren des Basiskörpers nach Außen abdichtet und dass sie das opake Quarzglas des Basiskörpers beim bestimmungsgemäßen Einsatz oder bei etwaigen Reinigungsmaßnahmen vor korrosivem Angriff schützt.

Die Versiegelungsschicht im Sinne der Erfindung zeichnet sich durch eine geschlossene Porosität und eine vergleichsweise höhere Dichte aus und sie ist transluzent oder transparent. Das opake oder mindestens teilweise opake Quarzglas des Basiskörpers dient hingegen als Wärmesperre. Opakes Quarzglas ist in der Regel weiß, reflektiert Infrarotstrahlung und hat daher eine gute wärmeisolierende Wirkung.

Der Verglasungsprozess einer getrockneten Schlickerschicht wird im Allgemeinen nicht nur von der Verglasungstemperatur bestimmt, sondern maßgeblich auch von der Verglasungsdauer. Durch eine höhere Temperatur wird das Verglasen lediglich beschleunigt. Wesentlich im Sinne der Erfindung ist, dass die Schlickerschicht zur Bildung der Versiegelungsschicht bei gleicher Verglasungsdauer und gleicher Verglasungstemperatur dichter und transparenter als das Quarzglas des Basiskörpers wird. Je größer der Dichteunterschied ist, umso wirksamer ist die Versiegelungsschicht. Nur zum Zweck einer Vergleichsmöglichkeit wird als schlicker-spezifische Verglasungstemperatur im Sinne der Erfindung diejenige Temperatur definiert, bei der eine während einer Trocknungsdauer von 2 Stunden bei 90 °C in einem Ofen unter Luft getrocknete Schlickerschicht einer Dicke von 1 mm beim anschließenden Verglasen unter Luft während einer Dauer von 4 Stunden so transparent wird, dass sie im Wellenlängenbereich zwischen 600 nm bis 2650 nm eine spektrale Transmission von mindestens 60% aufweist.

Ein Verglasen der getrockneten Schlickerschicht durch lokales Erhitzen, beispielsweise mittels einer Flamme oder einem Laser, geht mit einem geringeren Energieeintrag einher und wird insbesondere dann bevorzugt, wenn eine Verformung oder eine andere Veränderung des Basiskörpers zu befürchten ist.

Es hat sich als vorteilhaft erwiesen, wenn der zweite Schlicker zwischen 0,5 und 8 Gew.-%, und besonders bevorzugt zwischen 1 und 4 Gew.-%, SiO₂-Nanoteilchen enthält (bezogen auf den gesamten Feststoffgehalt).

Die SiO₂-Nanoteilchen bewirken eine Verdichtung der Schlickerschicht und damit einhergehend eine Verringerung der Verglasungstemperatur. Außerdem tragen die SiO₂-Nanoteilchen zu einer Erhöhung der Grünfestigkeit des getrockneten Schlickers bei, was die Handhabung erleichtert und die Rissbildung beim Trocknen und Verglasen verringert. Dies gilt insbesondere für SiO₂-Nanoteilchen, die Teilchengrößen von weniger als 100 nm aufweisen, vorzugsweise weniger als 50 nm.

Der zweite Schlicker enthält im Mittel deutlich kleiner SiO₂-Teilchen als der erste Schlicker. Es hat sich bewährt, wenn im zweiten Schlicker amorphe SiO₂-Teilchen mit Teilchengrößen im Bereich zwischen 1 µm und 30 µm den größten Feststoff-Volumenanteil ausmachen, wobei die amorphen SiO₂-Teilchen des zweiten Schlickers eine Teilchengrößenverteilung aufweisen, die durch einen D₅₀ -Wert von weniger als 40 µm, vorzugsweise weniger als 30 µm, und besonders bevorzugt weniger als 15 µm, gekennzeichnet ist, und dass die amorphen SiO₂-Teilchen des ersten Schlickers eine Teilchengrößenverteilung aufweisen, die durch einen D₅₀ - Wert gekennzeichnet ist, der größer ist als der D₅₀ -Wert der Teilchengrößenverteilung beim zweiten Schlicker.

Vorzugsweise weisen die zweiten amorphen SiO₂-Teilchen des zweiten Schlickers eine Teilchengrößenverteilung auf, die durch einen D₅₀ -Wert von weniger als 40 µm, vorzugsweise weniger als 30 µm, und besonders bevorzugt weniger als 15 µm, gekennzeichnet ist.

SiO₂-Teilchen in diesem Größenbereich ermöglichen die Einstellung eines besonders hohen Feststoffgehalts des zweiten Schlickers, und zeigen ein vorteilhaftes Verglasungsverhalten, so dass sich die entsprechende Schlickerschicht bei besonders niedrigen Temperaturen verglast werden kann.

Demgegenüber weisen die amorphen SiO₂-Teilchen des ersten Schlickers bevorzugt eine Teilchengrößenverteilung auf, die durch einen D₅₀ -Wert gekennzeichnet ist, der größer ist als der D₅₀ -Wert der Teilchengrößenverteilung beim zweiten Schlicker. Auch diese Maßnahme bewirkt eine Vergrößerung des Unterschiedes der Verglasungstemperaturen von erstem und zweitem Schlicker.

Der Feststoffgehalt des zweiten Schlickers wird vorzugsweise möglichst hoch eingestellt. Im Hinblick hierauf weisen die zweiten amorphen SiO₂-Teilchen eine mehrmodale Teilchengrößenverteilung auf, mit einem ersten Maximum der Grö-βenverteilung (D₅₀-Wert) im Bereich von 0,5 und 3 µm, vorzugsweise 1 bis 3 µm, und mit einem zweiten Maximum im Bereich von 5 bis 40 µm, vorzugsweise 5 bis 15 µm.

Eine derartige mehrmodale Teilchengrößenverteilung mit mindestens zwei, vorzugsweise drei und mehr Verteilungsmaxima, erleichtert die Einstellung einer hohen Feststoffdichte des zweiten Schlickers, wodurch die Schrumpfung beim Trocknen und Sintern und damit die Gefahr einer Rissbildung vermindert werden. Beispielsweise können Teilchenverteilungen mit D₅₀-Werten von 2, 5, 15, 30 und 40 µm allein oder in Kombination zum Einsatz kommen.

Es hat sich als besonders vorteilhaft erwiesen, wenn mindestens 90 Gew.-% der zweiten amorphen SiO₂-Teilchen des zweiten Schlickers sphärisch ausgebildet sind.

Sphärische Teilchen erleichtern die Einstellung einer hohen Feststoffdichte im Schlicker, so dass Spannungen beim Trocknen und Verglasen verringert werden. Im Idealfall sind alle SiO₂-Teilchen des zweiten Schlickers sphärisch ausgebildet.

Demgegenüber liegen beim ersten Schlicker vorzugsweise mindestens 50 Gew.-% der amorphen SiO₂-Teilchen in splitteriger Form vor, wobei sie durch Nassmahlen von SiO₂-Augangskörnung erzeugt werden.

Die amorphen Teilchen werden hierbei durch Nassmahlen von SiO₂-Körnung hergestellt, und sie weisen eine Teilchengrößenverteilung im oben genannten Bereich auf. Derartige amorphe SiO₂-Teilchen zeigen eine vergleichsweise geringe Trockenschwindung. Daher kann der Schlicker des Basiskörpers ohne Rissbildung getrocknet und verglast werden, wie dies auch ansonsten aus dem Stand der Technik bekannt ist. Durch das Vorliegen splitteriger SiO₂-Körnung wird außerdem die mechanische Festigkeit des Grünkörpers nach dem Trocknen erhöht, was sich insbesondere bei dickeren Basiskörpern positiv bemerkbar macht.

Durch die Kombination des Einsatzes amorpher SiO₂-Teilchen mit überwiegend splitteriger Morphologie für die Herstellung des Basiskörpers und amorpher SiO₂-Teilchen mit überwiegend sphärischer Morphologie für die Herstellung der Versiegelungsschicht ergeben sich außerdem Unterschiede im Sinterverhalten und damit einhergehend in den resultierenden optischen Eigenschaften der benachbarten Quarzglasqualitäten, was die Ausbildung einer definierten Grenzfläche ohne großen Übergangsbereich um die Kontaktfläche erleichtert.

Ein hoher Feststoffgehalt trägt zu einer gleichmäßigen und geringen Schwindung bei, so dass Trocknungs- und Sinterrisse vermindert werden. Daher können mit Schlickern mit hohen Feststoffgehalten relativ große Dicken der Schlickerschicht erzeugt werden. Andererseits nimmt bei sehr hohen Feststoffgehalten von mehr als 90 % die Auftragsfähigkeit des zweiten Schlickers ab.

Vorteilhafterweise bestehen die zweiten amorphen SiO₂-Teilchen und die SiO₂-Nanoteilchen aus synthetischem SiO₂.

Synthetisches SiO₂ zeichnet sich durch hohe Reinheit aus. Das Quarzglas der so erzeugten Versiegelungsschicht hat daher einen Verunreinigungsgehalt von weniger als 1 Gew.-ppm (abgesehen von etwaigen Dotierstoffen), so dass es im UV-Bereich bis etwa zu einer Wellenlänge von etwa 180 nm wenig absorbiert und daher die Reflektoreigenschaften des Basiskörpers wenig beeinträchtigt. Dies gilt insbesondere auch für den UV-Wellenlängenbereich. Eine Versiegelungsschicht mit hoher Reinheit verhindert zudem einen Austritt von Verunreinigungen aus dem Basiskörper und ermöglicht so auch für verunreinigungssensitiven Anwendungen wie der Halbleiterfertigung einen Einsatz eines kostengünstigeren Basiskörpers mit einer verhältnismäßig geringeren Reinheit.

Die Dispersionsflüssigkeit kann auf wässriger Basis bestehen. Dies ist insbesondere für die Herstellung des ersten Schlickers zur Erzeugung des Basiskörpers vorteilhaft. Die polare Natur der wässrigen Phase eines solchen Schlickers kann sich auf die Wechselwirkung der SiO₂-Teilchen vorteilhaft auswirken.

Für den zweiten Schlicker gemäß der Erfindung besteht die zweite Dispersionsflüssigkeit jedoch bevorzugt auf Basis eines organischen Lösungsmittels, vorzugsweise auf alkoholischer Basis.

Dadurch erfolgt das Trocknen deutlich schneller als bei einer wässrigen Schlikkerphase. Dies bringt eine Zeitersparnis mit sich und führt zu einer schnelleren Fixierung der Schlickerschicht auf dem Basiskörper, so dass ein Abfließen der Schlickerschicht vermieden wird. Durch Zugabe einer geringfügigen Wassermenge (weniger als 30 Vol.-%) in der Dispersionsflüssigkeit kann die Verarbeitungsdauer den jeweiligen Anforderungen angepasst werden.

Der Gehalt an Metalloxid-Verunreinigungen beträgt vorzugsweise weniger als 1 Gew.-ppm. Der Reinheitsgrad des Quarzglases für die Versiegelungsschicht ist in der Regel höher als der des Basiskörper-Quarzglases. Bei diesem bestehen die SiO₂-Teilchen in der Regel aus gereinigtem natürlich vorkommendem Rohstoff, wie dies in der oben erwähnten DE 44 40 104 C2 beschrieben ist.

In dem Zusammenhang hat es sich bewährt, wenn das Verglasen der getrockneten Schlicker-Schicht durch Erhitzen auf eine Temperatur im Bereich zwischen 1000 °C und 1460 °C, vorzugsweise zwischen 1200 °C und 1440 °C, erfolgt.

Wesentlich dabei ist, dass das Quarzglas des Basiskörpers opak und damit diffus reflektierend bleibt, wohingegen die Versiegelungsschicht dicht und frei von offener Porosität sintert. Die vollständige Transparenz der Versiegelungsschicht ist die bevorzugte Ausführungsform, wenn es auf eine hohe Dichte, Porenfreiheit und gute Ätzresistenz des herzustellenden Verbundkörpers ankommt.

Es hat sich bewährt, wenn der Basiskörper beim Erzeugen der Schlickerschicht als poröser Grünkörper vorliegt.

Auf den über die Schlicker-Route erzeugten, unverglasten Grünkörper wird eine Schlickerschicht aus dem zweiten Schlicker aufgebracht, wie oben beschrieben. Der Verbund aus Grünkörper und Schlickerschicht wird anschließend verglast. Diese Verfahrensvariante hat den Vorteil, dass bei einer gegebenen Verglasungstemperatur - beispielsweise 1430 °C - die Schlickerschicht bereits zu einer transparenten Versiegelungsschicht verglast, währen der Grünkörper noch opak bleibt. Für die Herstellung eines Verbundkörpers aus Basiskörper und Versiegelungsschicht ist somit nur ein einziger Verglasungsvorgang erforderlich.

Es wird eine Verfahrensvariante bevorzugt, bei der die transparente Versiegelungsschicht sukzessive durch Wiederholung der oben genannten Verfahrensschritte (b) und (c) ausgebildet wird, wobei die Teilchengrößenverteilung des jeweils eingesetzten zweiten Schlickers zunehmend in Richtung einer feineren Körnung verschoben ist. wobei vorzugsweise dem Verfahrensschritt (c) jeweils ein Verglasen nach Verfahrensschritt (d) folgt.

Hierbei wird die Versiegelungsschicht sukzessive erzeugt, wobei zunächst ein zweiter Schlicker eingesetzt wird, der vergleichsweise gröbere Teilchen enthält, dadurch werden im Basiskörper vorhandene offene Poren geschlossen. Daraufhin erfolgt das einmalige oder mehrmalige Auftragen von weiteren Schlickerschichten, wobei sich die Schlicker durch eine feinere Teilchengrößenverteilung auszeichnen. Dadurch gelingt es, glatte Oberflächen zu erzeugen. Diese Verfahrensweise ist dazu geeignet, möglichst dicke Versiegelungsschichten aufzubauen, oder eine Versiegelungsschicht, die eine Zwischenschicht mit besonderen Eigenschaften umfasst.

Nach jedem Auftragen der Schlickerschicht wird diese getrocknet. Es hat sich aber auch bewährt, wenn die Schlickerschicht wenigstens geringfügig thermisch verdichtet wird, wenn auch hierbei die Verdichtung nicht bis zur Transparenz erfolgen muss.

Eine hohe Reflexion im UV- Wellenlängenbereich (zum Beispiel von mehr als 90 %) setzt Opazität und extrem hohe Reinheit des Quarzglases voraus. Die zuletzt genannte Voraussetzung ist beim Quarzglas des Basiskörpers in der Regel nicht erfüllt, so dass der Basiskörper dann nicht im UV-Wellenlängenbereich reflektiert. Bei der Verfahrensvariante wird eine Zwischenschicht auf dem Basiskörper erzeugt, die beide oben genannten Voraussetzungen erfüllt. Die Reinheit wird durch den Einsatz von synthetisch erzeugtem SiO₂ gewährleistet, wobei insbesondere eine geringe Verunreinigung mit Lithiumoxid hervorzuheben ist. Der Gehalt an Lithium liegt unterhalb von 100 Gew.-ppb, vorzugsweise bei weniger als 20 Gew.-ppb. Die Opazität der Zwischenschicht wird beispielsweise erreicht, indem die amorphe SiO₂-Körnung relativ grobkörnig gewählt wird und/oder indem dem betreffenden Schlicker keine oder wenige SiO₂-Nanoteilchen zugesetzt werden.

Es hat sich bewährt, wenn ein plattenförmiger Basiskörper eingesetzt und mit der Versiegelungsschicht versehen wird.

Der Basiskörper liegt hierbei als Platte mit beliebiger Geometrie (Ring, Rechteck, Kreis und dergleichen) mit planen Flächen vor, und er wird durch ein Schlickergießverfahren erhalten. Die Plattenform wird unmittelbar durch den Schlickergießprozess vorgegeben oder sie wird nachträglich durch mechanische Bearbeitung des durch Schlickergießen erhaltenen Formkörpers erzeugt.

Die Oberfläche des Basiskörpers wird ganz oder teilweise mit einer Versiegelungsschicht versehen, vorzugsweise werden dabei mindestens eine oder beide Planflächen versiegelt, für besondere Anwendungen kommt auch eine Versiegelung der Stirnflächen in Betracht.

Der nach dem Verfahren erhaltene Verbundkörper wird vorzugsweise als Reflektor eingesetzt. Bisher wurden plattenförmige Reflektoren zum Einsatz in der Halbleiterfertigung auch dadurch hergestellt, dass eine opake Quarzglasplatte beidseitig mit transparenten Platten aus Quarzglas verschmolzen und der Verbund anschließend elongiert wurde. Diese Verfahrensweise ist jedoch sehr aufwändig und führt zu leicht welligen Oberflächen. Die nach dem erfindungsgemäßen Verfahren erhaltene opake Quarzglasplatte ist geeignet, derartige sandwichartig aufgebaute opake Quarzglasplatten zu ersetzen.

In dem Zusammenhang hat es sich als besonders günstig erwiesen, wenn der mit der Versiegelungsschicht versehene Verbundkörper eine Planfläche aufweist und in Richtung parallel Planfläche elongiert wird.

Der eine Planfläche aufweisende Verbundkörper dient hierbei als Vorform, aus der durch Elongieren eine Verbundplatte mit vorgegebenen Endabmessungen gezogen werden kann, die sich insbesondere durch eine dichte und glatte Oberfläche auszeichnet.

### Ausführungsbeispiel

Nachfolgend wird die Erfindung anhand von Ausführungsbeispielen und einer Zeichnung näher erläutert. In der Zeichnung zeigen im Einzelnen
- **Figur 1**: ein Diagramm der SiO₂-Teilchengrößenverteilung einer Rohstoffkomponente für den Einsatz zur Herstellung eines Schlickers zur Erzeugung einer Versiegelungsschicht (vor dem Zusatz von SiO₂-Nanoteilchen), und
- **Figur 2**: eine Quarzglas-Platte zum Einsatz als Wärmestrahlungsreflektor in der Halbleiterfertigung in schematischer Darstellung

### Herstellung eines plattenförmiqen Basiskörpers (Beispiel 1)

Es wird ein Schlicker aus Wasser und SiO₂-Teilchen hergestellt und durch Nassmahlen homogenisiert, wie er in der DE 44 40 104 A1 beschrieben ist. Aus diesem Schlicker wird nach dem üblichen Formgießen, Trocknen und Sintern bei 1440 °C ein plattenförmiger Sinterkörper aus opakem Quarzglas mit Abmessungen von 400 x 400 mm und einer Dicke von 2 mm hergestellt. Die spektrale Transmission des opaken Quarzglases im Wellenlängenbereich zwischen 200 nm und 2650 nm liegt bei weniger als 4%.

### Herstellen des Schlickers für eine Versiegelungsschicht

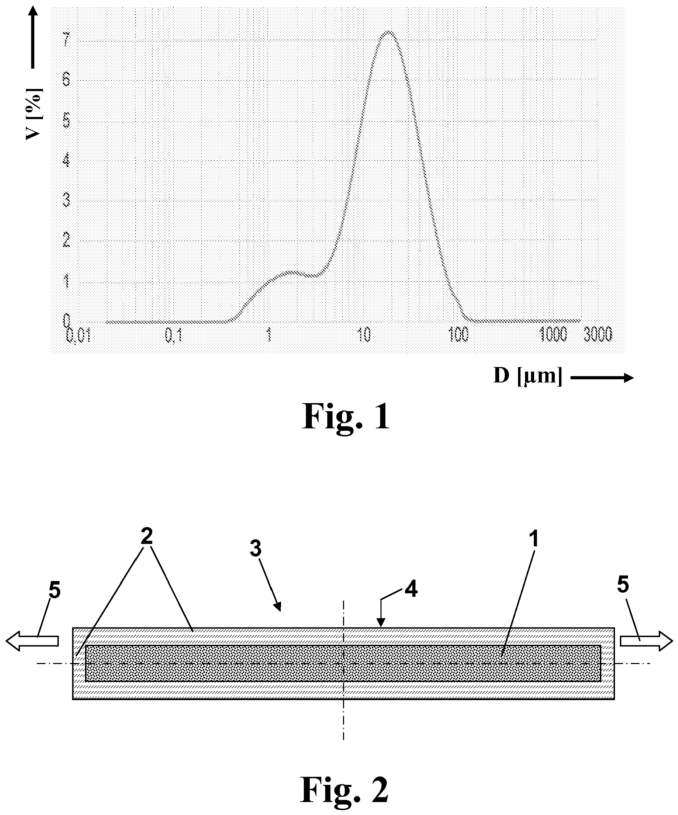

Es wird ein weiterer Schlicker hergestellt, der zur Erzeugung der Versiegelungsschicht dient. **Figur 1** zeigt eine Teilchengrößenverteilung einer wesentlichen Rohstoffkomponente dieses Schlickers. Auf der y-Achse ist der Volumenanteil V (in %) aufgetragen, auf der x-Achse der Teilchendurchmesser D (in µm).

Diese Rohstoffkomponente besteht aus sphärischen, synthetisch erzeugten SiO₂-Teilchen, die sich durch eine mehrmodale Teilchengrößenverteilung mit einem verhältnismäßig engen Maximum der Größenverteilung bei etwa 15 µm (D₅₀-Wert) auszeichnen. Ein Nebenmaximum liegt im Bereich um 2 µm. Diese Rohstoffkomponente mit einem D₅₀-Wert bei15 µm wird im Folgenden als R₁₅ bezeichnet.

Für die Herstellung des Schlickers werden weitere Rohstoffkomponenten eingesetzt, die D₅₀-Wert bei 5 µm, 30 µm und 40 µm aufweisen und deren Teilchengrößenverteilungen ansonsten der in Figur 1 gezeigten ähneln, das heißt insbesondere, dass diese Rohstoffkomponenten jeweils eine Teilchengrößenverteilung mit einem Nebenmaximum um 2 µm aufweisen. Diese Rohstoffkomponenten werden je nach ihrem D₅₀-Wert des Hauptmaximums mit R₅, R₃₀, beziehungsweise als R₄₀ bezeichnet. Diese Rohstoffkomponenten werden vorab in einem Heißchlorierverfahren gereinigt. Der Verunreinigungsgehalt der gereinigten Rohstoffkomponenten ist gering und liegt insgesamt bei weniger als 1 Gew.-ppm. Insbesondere der Gehalt an Li₂O beträgt weniger als 10 Gew.-ppb.

Den Rohstoffkomponenten werden außerdem SiO₂-Nanoteilchen mit Durchmessern um 40 nm zugesetzt, die als "pyrogene Kieselsäure" bezeichnet werden.

Folgende Rezepturen haben sich bewährt:

**Rezeptur 1**

| | |
|---|---|
| R₃₀ | 250 g |
| R₁₅ | 500 g |
| R₅ | 200 g |

Pyrogene Kieselsäure: 50 g mit BET-Oberfläche von 60 m²/g

Die genannten Komponenten werden in reinem Ethanol dispergiert, so das sich ein Feststoffgehalt von 86 Gew.-% ergibt.

**Rezeptur 2**

| | |
|---|---|
| R₁₅ | 400 g |
| R₅ | 90 g |

Pyrogene Kieselsäure: 10 g mit BET-Oberfläche von 200 m²/g

Die genannten Komponenten werden in reinem Ethanol dispergiert, so dass sich ein Feststoffgehalt von 84 Gew.-% einstellt.

**Rezeptur 3**

| | |
|---|---|
| R₁₅ | 270 g |
| R₅ | 35 g |

Pyrogene Kieselsäure: 4 g mit BET-Oberfläche von 50 m²/g

Die genannten Komponenten werden mit 70 g Polysilazan in Methanol dispergiert. Der Feststoffgehalt liegt bei 83 Gew.-%.

Der so erzeugten hoch gefüllten Schlicker zeigen thixotropes Verhalten. Die Schlicker sind gieß- und streichfähig und aus diesem Grund für Verarbeitungstechniken wie Tauchen und Aufrakeln (Aufstreichen, Abstreifen, Schaben, Aufspachteln, Abziehen, Aufziehen und dergleichen) besonders gut geeignet. Bei jeder Rezeptur machen die Korngrößen unterhalb von 30 µm den größten Volumenanteil der Körnung aus.

### Herstellung eines Verbundkörpers aus Sinterkörper und Versiegelungsschicht (Beispiel 1)

Der oben beschriebene plattenförmige opake Sinterkörper (Basiskörper) wird in den Schlicker gemäß Rezeptur 1 einige Sekunden lang eingetaucht. Es bildet sich dadurch eine gleichmäßige, geschlossene Schlicker-Schicht mit einer Dicke von etwa 1 mm. Diese Schlicker-Schicht auf Ethanolbasis wird zunächst ca. 5 Stunden bei Raumtemperatur getrocknet, wobei der Ethanol verdunstet. Die getrocknete Schlicker-Schicht ist rissfrei, und sie hat eine mittlere Dicke von etwas weniger als 0,9 mm.

Die getrocknete Schlicker-Schicht wird anschließend zusammen mit dem Sinterkörper (=Verbundkörper) in einem Verglasungsofen verglast. Das Heizprofil umfasst ein langsames Aufheizen auf 400 °C und eine Haltezeit von 2 h zum Entfernen von Kohlenwasserstoffresten. Anschließend wird der Verbundkörper innerhalb von einer Stunde auf eine untere Heiztemperatur von 1000 °C erhitzt und auf dieser Temperatur 2 Stunden lang gehalten, und anschließend über eine zweite, flache Heizrampe über vier Stunden auf eine obere Heiztemperatur von 1440 °C erhitzt. Die Haltezeit bei der oberen Heiztemperatur beträgt im Ausführungsbeispiel zwei Stunden. Danach ist die Schlicker-Schicht vollständig zu einer Versiegelungsschicht verglast. Sie ist transparent und blasenfrei und ihre Dichte entspricht etwa derjenigen von Quarzglas. Ihre direkte spektrale Transmission im Wellenlängenbereich zwischen 200 nm und 2650 nm liegt oberhalb von 60 %. Die Opazität und spektrale Transmission des Sinterkörpers ist unverändert.

**Figur 2** zeigt den so erhaltenen Verbundkörper in Form einer beschichteten Quarzglasplatte 3 schematisch anhand einer Schnittdarstellung. Der Platte 3 besteht aus einem rechteckigen Basiskörper 1 aus opakem Quarzglas, der allseitig von einer rissfreien und transparenten SiO₂-Versiegelungsschicht 2 umgeben ist, die aus Darstellungsgründen in der Figur übertrieben dick eingezeichnet ist. Die Gesamtdicke der Quarzglasplatte 3 liegt bei etwas weniger als 4 mm.

Die mittlere Schichtdicke der Versiegelungsschicht 2 lieg bei 0,8 mm. Sie zeichnet sich durch Rissfreiheit sowie chemische und mechanische Eigenschaften aus, die denen von Quarzglas entsprechen. Sie zeigt eine hohe Trockenätzbeständigkeit gegenüber den üblichen fluorhaltigen Prozessgasen der Halbleiterfertigung.

### Elongieren des Verbundkörpers

Der Verbundkörper 3 ist in der oben beschriebenen Form unmittelbar als Wärmestrahlungsreflektor einsetzbar. Er kann aber auch als Vorform zur Herstellung einer größeren Quarzglas-Platte dienen, indem er in Richtung parallel zur Plattenoberfläche 4 in einem Heißverformungsprozess elongiert wird, wie dies die Richtungspfeile 5 andeuten. Günstige Elongierverhältnisse für die Quarzglas-Platte 3 liegen zwischen 2 oder 5.

### Herstellung eines plattenförmigen Basiskörpers (Beispiel 2)

Es wird ein Schlicker aus Wasser und SiO₂-Teilchen hergestellt und durch Nassmahlen homogenisiert, wie er in der DE 44 40 104 A1 beschrieben ist. Aus diesem Schlicker wird nach dem üblichen Formgießen und Trocknen ein ringförmiger Grünkörper aus porösem SiO₂ mit einem Außendurchmesser von 300 mm und einer Dicke von 20 mm hergestellt.

### Herstellung eines Verbundkörpers (Beispiel 2)

Auf der Oberfläche des ringförmigen Grünkörpers wird ein Schlicker gemäß Rezeptur 3 aufgetragen. Dieser Schlicker ist verhältnismäßig dünnflüssig und lässt sich leicht Aufstreichen. Es bildet sich dadurch eine gleichmäßige, geschlossene Schlicker-Schicht mit einer Dicke von etwa 2 mm. Die Schlickerschicht verfestigt sich sehr rasch, da der poröse Grünkörper ein Teil der Flüssigkeit einsaugt. Nach dem vollständigen Trocknen ist der Schlicker-Schicht rissfrei, und sie hat eine mittlere Dicke von etwas weniger als 1,8 mm.

Die getrocknete Schlicker-Schicht wird anschließend zusammen mit dem Grünkörper in einem Verglasungsofen verglast. Das Heizprofil entspricht demjenigen wie oben anhand Beispiel 1 beschrieben, mit der Ausnahme, dass die Haltezeit bei der oberen Heiztemperatur von 1440 °C drei Stunden beträgt. Danach sind Schlicker-Schicht und Grünkörper vollständig verglast. Der Grünkörper liegt nun als opakes Quarzglas vor, dessen spektrale Transmission im oben genannten Wellenlängenbereich weniger als 4% beträgt. Die Schlickerschicht liegt demgegenüber als transparente und blasenfreie Versiegelungsschicht mit einer Dicke von etwa 1,5 mm vor. Deren Dichte entspricht etwa derjenigen von Quarzglas und sie weist eine direkte spektrale Transmission im Wellenlängenbereich zwischen 200 nm und 2650 nm oberhalb von 60 % auf (bezogen auf eine Dicke von 1 mm).

Die zeichnet sich durch Rissfreiheit und hohe Trockenätzbeständigkeit gegenüber den üblichen fluorhaltigen Prozessgasen der Halbleiterfertigung aus. Der so erhaltene Verbundkörper ist als Flansch für chemische Reaktoren oder als für einen Single-Wafer-Halter einsetzbar.

## Patentansprüche

1. Verfahren zur Herstellung eines Verbundkörpers aus einem Basiskörper aus opakem Quarzglas und einer dichten Versiegelungsschicht, das folgende Verfahrensschritte umfasst:
(a) Herstellen des Basiskörpers unter Einsatz eines ersten Schlickers, der eine erste Dispersionsflüssigkeit und erste amorphe SiO₂-Teilchen mit Teilchengrößen bis maximal 500 µm enthält, wobei Teilchen mit Teilchengrößen im Bereich zwischen 1 µm und 60 µm den größten Feststoff-Volumenanteil ausmachen, der einen ersten Mengenanteil an SiO₂-Nanoteilchen mit Teilchengrößen von weniger als 100 nm enthält, und der durch eine erste, höhere Verglasungstemperatur charakterisiert ist.
(b) Bereitstellen eines zweiten Schlickers, der eine zweite Dispersionsflüssigkeit und zweite amorphe SiO₂-Teilchen mit Teilchengrößen bis maximal 100 µm enthält, wobei Teilchen mit Teilchengrößen im Bereich zwischen 1 µm und 40 µm den größten Feststoff-Volumenanteil ausmachen, und dessen Zusammensetzung sich von derjenigen des ersten Schlickers mindestens darin unterscheidet, dass er einen zweiten Mengenanteil an SiO₂-Nanoteilchen enthält, der im Bereich zwischen 0,2 Gew.-% bis 15 Gew.-% größer ist als der erste Mengenanteil (bezogen auf jeweils den gesamten Feststoffgehalt), und der durch eine zweite, niedrigere Verglasungstemperatur charakterisiert ist,
(c) Erzeugen einer Schlickerschicht aus dem zweiten Schlicker auf einer Oberfläche des Basiskörpers, Trocknen der Schlickerschicht
(d) und anschließendes Verglasen der Schlickerschicht unter Bildung der dichten Versiegelungsschicht.

2. Verfahren nach Anspruch 1, **dadurch gekennzeichnet, dass** der zweite Schlicker zwischen 0,5 und 8 Gew.-%, und besonders bevorzugt zwischen 1 und 4 Gew.-%, SiO₂-Nanoteilchen enthält (bezogen auf den gesamten Feststoffgehalt).

3. Verfahren nach Anspruch 1 oder 2, **dadurch gekennzeichnet, dass** im zweiten Schlicker amorphe SiO₂-Teilchen mit Teilchengrößen im Bereich zwischen 1 µm und 30 µm den größten Feststoff-Volumenanteil ausmachen, wobei die amorphen SiO₂-Teilchen des zweiten Schlickers eine Teilchengrößenverteilung aufweisen, die durch einen D₅₀ -Wert von weniger als 40 µm, vorzugsweise weniger als 30 µm, und besonders bevorzugt weniger als 15 µm, gekennzeichnet ist, und dass die amorphen SiO₂-Teilchen des ersten Schlickers eine Teilchengrößenverteilung aufweisen, die durch einen D₅₀ -Wert gekennzeichnet ist, der größer ist als der D₅₀ -Wert der Teilchengrößenverteilung beim zweiten Schlicker.

4. Verfahren nach einem der vorhergehenden Ansprüche, **dadurch gekennzeichnet, dass** die zweiten amorphen SiO₂-Teilchen eine mehrmodale Teilchengrößenverteilung aufweisen, mit einem ersten Maximum der Größenverteilung (D₅₀-Wert) im Bereich von 0,5 und 3 µm, vorzugsweise 1 bis 3 µm, und mit einem zweiten Maximum im Bereich von 5 bis 40 µm, vorzugsweise 5 bis 15 µm.

5. Verfahren nach einem der vorhergehenden Ansprüche, **dadurch gekennzeichnet, dass** mindestens 90 Gew.-% der amorphen SiO₂-Teilchen des zweiten Schlickers sphärisch ausgebildet sind.

6. Verfahren nach einem der vorhergehenden Ansprüche, **dadurch gekennzeichnet, dass** mindestens 50 Gew.-% der amorphen SiO₂-Teilchen des ersten Schlickers durch Nassmahlen von SiO₂-Ausgangskörnung erzeugt werden und in splitteriger Form vorliegen.

7. Verfahren nach einem der vorhergehenden Ansprüche, **dadurch gekennzeichnet, dass** die zweiten amorphen SiO₂-Teilchen und die SiO₂-Nanoteilchen aus synthetischem SiO₂ bestehen.

8. Verfahren nach einem der vorhergehenden Ansprüche, **dadurch gekennzeichnet, dass** die zweite Dispersionsflüssigkeit auf Basis eines organischen Lösungsmittels, vorzugsweise auf alkoholischer Basis, vorliegt.

9. Verfahren nach einem der vorhergehenden Ansprüche, **dadurch gekennzeichnet, dass** das Verglasen der getrockneten Schlicker-Schicht gemäß Verfahrensschritt (d) durch Erhitzen auf eine Temperatur im Bereich zwischen 1000 °C und 1460 °C, vorzugsweise zwischen 1200 °C und 1440 °C, erfolgt.

10. Verfahren nach einem der vorhergehenden Ansprüche, **dadurch gekennzeichnet, dass** der Basiskörper beim Erzeugen der Schlickerschicht als poröser Grünkörper vorliegt.

11. Verfahren nach einem der vorhergehenden Ansprüche, **dadurch gekennzeichnet, dass** die transparente Versiegelungsschicht sukzessive durch Wiederholung der Verfahrensschritte (b) und (c) von Anspruch 1 ausgebildet wird, wobei die Teilchengrößenverteilung des jeweils eingesetzten zweiten Schlickers zunehmend in Richtung eines niedrigeren D₅₀-Wertes verschoben ist, wobei vorzugsweise dem Verfahrensschritt (c) jeweils ein Verglasen nach Verfahrensschritt (d) folgt.

12. Verfahren nach einem der vorhergehenden Ansprüche, **dadurch gekennzeichnet, dass** der Verbundkörper als diffus reflektierender Reflektor eingesetzt wird.

13. Verfahren nach einem der vorhergehenden Ansprüche, **dadurch gekennzeichnet, dass** dem ersten Schlicker ein Dotierstoff beigefügt wird, der einem Verglasen zu transparentem Quarzglas entgegenwirkt, und der in nanoskaliger Form vorliegt und aus der Gruppe ausgewählt wird, bestehend aus Si₃N₄, SiC und AlN.

14. Verfahren nach einem der vorhergehenden Ansprüche, **dadurch gekennzeichnet, dass** ein plattenförmiger Basiskörper erzeugt und mit der Versiegelungsschicht versehen wird.

15. Verfahren nach Anspruch 14, **dadurch gekennzeichnet, dass** der mit der Versiegelungsschicht versehene Basiskörper eine Planfläche aufweist und in Richtung parallel zur Planfläche elongiert wird.

## Claims

1. A method for producing a composite body from a basic body of opaque quartz glass and a dense sealing layer, the method comprising the following steps:
(a) producing the basic body by using a first slip which contains a first dispersion liquid and first amorphous SiO₂ particles having particle sizes of not more than 500 µm, particles with particle sizes in the range between 1 µm and 60 µm accounting for the largest solids volume fraction, which contains a first quantitative amount of SiO₂ nanoparticles with particle sizes of less than 100 nm, and which is distinguished by a first higher vitrification temperature;
(b) providing a second slip which contains a second dispersion liquid and second amorphous SiO₂ particles having particle sizes of not more than 100 µm, particles with particle sizes in the range between 1 µm and 40 µm accounting for the largest solids volume fraction, and the composition of which differs from that of the first slip at least in that it contains a second quantitative amount of SiO₂ nanoparticles which in the range between 0.2% by wt. to 15% by wt. is greater than the first quantitative amount (based each time on the total solids content), and which is distinguished by a second lower vitrification temperature;
(c) producing a slip layer from the second slip on a surface of the basic body, drying the slip layer,
(d) and subsequently vitrifying the slip layer so as to form so as to form of the dense sealing layer.

2. The method according to claim 1, **characterized in that** the second slip contains between 0.5% by wt. and 8% by wt., and particularly preferably between 1% by wt. and 4% by wt., of SiO₂ nanoparticles (based on the total solids content).

3. The method according to claim 1 or 2, **characterized in that** in the second slip amorphous SiO₂ particles with particle sizes in the range between 1 µm and 30 µm account for the largest solids volume fraction, whereby the amorphous SiO₂ particles of the second slip have a particle size distribution which is distinguished by a D₅₀ value of less than 40 µm, preferably less than 30 µm, and particularly preferably less than 15 µm, and whereby the amorphous SiO₂ particles of the first slip have a particle size distribution which is distinguished by a D₅₀ value greater than the D₅₀ value of the particle size distribution in the second slip.

4. The method according to any one of the preceding claims, **characterized in that** the second amorphous SiO₂ particles have a multimodal particle size distribution, with a first maximum of the size distribution (D₅₀ value) in the range of 0.5 µm to 3 µm, preferably 1 µm to 3 µm, and with a second maximum in the range of 5 µm to 40 µm, preferably 5 µm to 15 µm.

5. The method according to any one of the preceding claims, **characterized in that** at least 90% by wt. of the amorphous SiO₂ particles of the second slip are made spherical.

6. The method according to any one of the preceding claims, **characterized in that** at least 50% by wt. of the amorphous SiO₂ particles of the first slip are produced by wet grinding SiO₂ start granules and are present in splintery form.

7. The method according to any one of the preceding claims, **characterized in that** the second amorphous SiO₂ particles and the SiO₂ nanoparticles consist of synthetic SiO₂.

8. The method according to any one of the preceding claims, **characterized in that** the second dispersion liquid is based on an organic solvent, preferably on alcohol.

9. The method according to any one of the preceding claims, **characterized in that** the dried slip layer is vitrified according to method step (d) by heating to a temperature ranging between 1000°C and 1460°C, preferably between 1200°C and 1440°C.

10. The method according to any one of the preceding claims, **characterized in that** the basic body is present as a porous green body during formation of the slip layer.

11. The method according to any one of the preceding claims, **characterized in that** the transparent sealing layer is formed in successive order by repeating method steps (b) and (c) of claim 1, the particle size distribution of the respectively used second slip being more and more shifted towards a lower D₅₀ value, whereby preferably method step (c) is each time followed by vitrification according to method step (d).

12. The method according to any one of the preceding claims, **characterized in that** the composite body is used as a diffusely reflecting reflector.

13. The method according to any one of the preceding claims, **characterized in that** the first slip has added thereto a dopant counteracting vitrification into transparent quartz glass, and which is present in nanoscale form and is selected from the group consisting of Si₃N₄, SiC and AlN.

14. The method according to any one of the preceding claims, **characterized in that** a plate-shaped basic body is used and provided with the sealing layer.

15. The method according to claim 14, **characterized in that** the composite body which is provided with the sealing layer has a plane surface and is elongated in a direction in parallel with the plane surface.

## Revendications

1. Procédé de fabrication d'un corps composite à partir d'un corps de base constitué de verre de quartz opaque et d'une couche de colmatage étanche, lequel comprend les étapes de procédé suivantes :
(a) fabrication du corps de base en utilisant un premier coulis qui contient un premier liquide de dispersion et des premières particules amorphes de SiO₂ ayant des tailles de particules jusqu'à maximum 500 µm, des particules ayant des tailles de particules situées dans la plage comprise entre 1 µm et 60 µm représentant la plus grande fraction volumique de matières solides, qui contient une première proportion de nanoparticules de SiO₂ ayant des tailles de particules de moins de 100 µm et qui est **caractérisé par** une première température de vitrification plus élevée,
(b) mise à disposition d'un deuxième coulis qui contient un deuxième liquide de dispersion et des deuxièmes particules amorphes de SiO₂ ayant des tailles de particules jusqu'à maximum 100 µm, des particules ayant des tailles de particules situées dans la plage comprise entre 1 µm et 40 µm représentant la plus grande fraction volumique de matières solides, et dont la composition se distingue de celle du premier coulis au moins par le fait qu'il contient une deuxième proportion de nanoparticules de SiO₂ qui est supérieure dans la plage comprise entre 0,2% en poids jusqu'à 15% en poids à la première proportion (par rapport à respectivement la teneur totale en matières solides), et qui est **caractérisé par** une deuxième température de vitrification plus basse,
(c) production d'une couche de coulis à partir du deuxième coulis sur une surface du corps de base, séchage de la couche de coulis
(d) et ensuite vitrification de la couche de coulis avec formation de la couche de colmatage étanche.

2. Procédé selon la revendication 1, **caractérisé en ce que** le deuxième coulis contient entre 0,5 et 8% en poids, et de manière particulièrement préférée entre 1 et 4% en poids de nanoparticules de SiO₂ (par rapport à la teneur totale en matières solides).

3. Procédé selon la revendication 1 ou 2, **caractérisé en ce que** dans le deuxième coulis, des particules amorphes de SiO₂ ayant des tailles de particules situées dans la plage comprise en 1 µm et 30 µm représentent la plus grande fraction volumique de matières solides, les particules amorphes de SiO₂ du deuxième coulis présentant une distribution granulométrique qui est **caractérisée par** une valeur D₅₀ de moins de 40 µm, de préférence de moins de 30 µm, et de manière particulièrement préférée de moins de 15 µm, et en ce que les particules amorphes de SiO₂ du premier coulis présentent une distribution granulométrique qui est **caractérisée par** une valeur D₅₀ qui est supérieure à la valeur D₅₀ de la distribution granulométrique dans le premier coulis.

4. Procédé selon l'une quelconque des revendications précédentes, **caractérisé en ce que** les deuxièmes particules amorphes de SiO₂ présentent une distribution granulométrique plurimodale, avec un premier maximum de la distribution granulométrique (valeur D₅₀) situé dans la plage de 0,5 à 3 µm, de préférence de 1 à 3 µm, et avec un deuxième maximum situé dans la plage de 5 à 40 µm, de préférence de 5 à 15 µm.

5. Procédé selon l'une quelconque des revendications précédentes, **caractérisé en ce qu'**au moins 90% en poids des particules amorphes de SiO₂ du deuxième coulis sont réalisées de manière sphérique.

6. Procédé selon l'une quelconque des revendications précédentes, **caractérisé en ce qu'**au moins 50% en poids des particules amorphes de SiO₂ du premier coulis sont générées par broyage humide de granulométrie de sortie de SiO₂ et sont présentes sous forme de fragments.

7. Procédé selon l'une quelconque des revendications précédentes, **caractérisé en ce que** les deuxièmes particules amorphes de SiO₂ et les nanoparticules de SiO₂ sont constituées de SiO₂ synthétique.

8. Procédé selon l'une quelconque des revendications précédentes, **caractérisé en ce que** le deuxième liquide de dispersion est présent sur la base d'un solvant organique, de préférence sur la base d'alcool.

9. Procédé selon l'une quelconque des revendications précédentes, **caractérisé en ce que** la vitrification de la couche séchée de coulis est réalisée selon l'étape de procédé (d) par échauffement à une température située dans la plage comprise entre 1000°C et 1460°C, de préférence entre 1200°C et 1440°C.

10. Procédé selon l'une quelconque des revendications précédentes, **caractérisé en ce que** le corps de base est présent en tant que corps de base poreux lorsque la couche de coulis est générée.

11. Procédé selon l'une quelconque des revendications précédentes, **caractérisé en ce que** le la couche de colmatage transparente est successivement réalisée par répétition des étapes de procédé (b) et (c) de la revendication 1, la distribution granulométrique du deuxième coulis respectivement utilisé étant progressivement déplacée en direction d'une valeur D₅₀ plus basse, respectivement une vitrification selon l'étape de procédé (d) succédant de préférence à l'étape de procédé (c).

12. Procédé selon l'une quelconque des revendications précédentes, **caractérisé en ce que** le corps de base est utilisé en tant que réflecteur à réflexion diffuse.

13. Procédé selon l'une quelconque des revendications précédentes, **caractérisé en ce qu'**un agent de dopage est ajouté au premier coulis, lequel agent de dopage agit à l'opposé d'une vitrification en verre de quartz transparent, et lequel est présent à l'échelle nanométrique et est sélectionné dans le groupe constitué de Si₃N₄ SiC et AIN.

14. Procédé selon l'une quelconque des revendications précédentes, **caractérisé en ce qu'**un corps de base en forme de plaque est généré et est muni de la couche de colmatage.

15. Procédé selon la revendication 14, **caractérisé en ce que** le corps de base muni de la couche de colmatage présente une surface plane et est élongé en direction parallèle à la surface plane.
